# FASCICULE DE BREVET EUROPEEN

(11) **EP 4 344 131 B1**
(45) Date de publication et mention de la délivrance du brevet: **29.10.2025**
(21) Numéro de dépôt: 23198159.8
(22) Date de dépôt: 19.09.2023
(51) Int. Cl.: H04L 9/40

(54) **PROCÉDÉ D'ÉTABLISSEMENT DE SESSION MCDATA IPCON**
VERFAHREN ZUR HERSTELLUNG EINER IPKON-MCDATA-SITZUNG
METHOD FOR ESTABLISHING MCDATA IPCON SESSION

(30) Priorité: 20.09.2022 FR 2209495
(43) Date de publication de la demande: 27.03.2024
(73) Titulaire: Airbus DS SLC, 78990 Elancourt (FR)
(72) Inventeur: Paterour, Olivier, Elancourt (FR); Piroard, François, Elancourt (FR)
(74) Mandataire: Cabinet Camus Lebkiri

(56) Documents cités:
- "3rd Generation Partnership Project; Technical Specification Group Services and System Aspects; Security of the mission critical service; (Release 14)", 3GPP STANDARD ; TECHNICAL SPECIFICATION ; 3GPP TS 33.180, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V14.0.0, 15 June 2017 (2017-06-15), pages 1 - 118, XP051298598
- "3rd Generation Partnership Project; Technical Specification Group Core Network and Terminals; Mission Critical Data (MCData) media plane control; Protocol specification (Release 17)", vol. CT WG1, no. V17.2.0, 24 June 2022 (2022-06-24), pages 1 - 50, XP052183246, Retrieved from the Internet <URL:https://ftp.3gpp.org/Specs/archive/24_series/24.582/24582-h20.zip 24582-h20.docx> [retrieved on 20220624]

## Description

### DOMAINE TECHNIQUE DE L'INVENTION

Le domaine technique de l'invention est celui des télécommunications.

La présente invention concerne un procédé d'établissement de session MCData Internet Protocol Connectivity (IPCON) et en particulier un procédé d'établissement de session IPCON dans un réseau de communication selon le standard 3GPP MCS « 3rd Generation Partnership Program Mission-Critical System ».

### ARRIERE-PLAN TECHNOLOGIQUE DE L'INVENTION

Les normes de radiocommunication PMR (selon la dénomination anglo-saxonne « Professional Mobile Radio » pour « Radio Mobile Professionnelle ») TETRAPOL^{®}, TETRA^{®} ou encore P25^{®} permettent la mise en œuvre de réseaux professionnels sécurisés. Ces réseaux à bande étroite sont des réseaux nationaux ou locaux : ils sont implémentés par exemple au sein d'une organisation telle qu'une entreprise, au sein d'un pays par exemple pour les communications des pompiers, des forces de l'ordre, des militaires etc.

Ces réseaux évoluent vers une prise en charge d'échanges en large bande. Le standard 3GPP régissant les réseaux mobiles de type « GSM » selon la dénomination anglo-saxonne « Global System for Mobile Communications », notamment dans leurs troisième, quatrième et cinquième générations respectivement appelées « 3G », « 4G » et « 5G », et générations suivantes, et plus particulièrement dans les déploiements faisant appel à des services de communications critiques définis par le 3GPP appelés « MCS » selon la dénomination anglo-saxonne « Mission Critical Services » permet ces échanges sécurisés en large bande. Un réseau 3G, 4G ou 5G met en œuvre un équipement terminal 3G/4G/5G (appelé UE de l'anglais « User Equipement »), un réseau d'accès radio RAN (de l'anglais « Radio Access Network ») 3G/4G/5G et un cœur de réseau (3G/4G/5G). Les déploiements des services MCS en large bande ne se limitent bien entendu pas aux réseaux mobiles 3G/4G/5G mais incluent aussi des déploiements dans des réseaux IP (de l'anglais « Internet Protocol ») fixes et mobiles, par exemple des WLAN, de l'anglais « Wide Local Area Network ».

On entend par « réseau de communication selon le standard 3GPP MCS », un réseau de communication compatible avec le standard 3GPP MCS et plus particulièrement avec la version actuelle du 3GPP qui est la version 17 et avec les versions suivantes intégrant toutes les caractéristiques de l'invention.

Dans le standard 3GPP MCS, les services de communication suivants sont définis :
- MCPTT, de l'anglais « Mission Critical Push To Talk » pour « Appuyer Pour Parler en Mission Critique » en français, qui permet de réaliser des communications voix,
- MCVideo, qui permet de réaliser des communications vidéo,
- MCData, qui comprend trois sous-services :
   - SDS de l'anglais « Short Data Service » pour « Service de données courtes » en français et
   - FD de l'anglais « File Distribution » pour « Distribution de fichier » en français,
   - IPCON de l'anglais « IP Connectivity » pour « Connectivité IP » en français.

Le service MCData SDS permet le transport de données utiles (dans sa dénomination anglaise « payload ») ayant une taille variable. Le service MCData SDS couvre les fonctionalités de status et messaging. Il peut s'agir d'un texte ou d'un message étendu, d'un lien hypertexte permettant aux utilisateurs d'accéder à un contenu lié et accessible comme un fichier volumineux, des données de connaissance de la situation, des informations de localisation ou des instructions de commande.

Le service MCData IPCON concerne l'envoi de données utiles, entre deux clients MCData. Il faut souligner que, contrairement au service MCData SDS, le service MCData IPCON est un service de transport agnostique à la nature des échanges applicatifs. Ainsi, le service MCData IPCON permet l'échange de données IP en utilisant le service de transport MCData comme intermédiaire et assure le transport des données IP pour, par exemple, les hôtes de données, les serveurs, etc. L'échange des données n'est pas limité à une transaction.

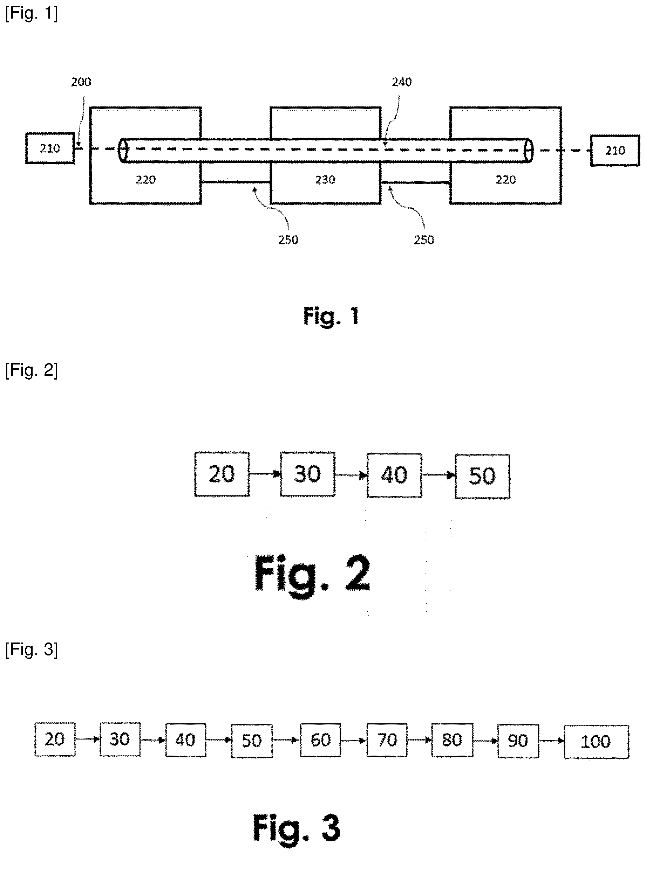

La figure 1 est une représentation schématique d'un système pouvant servir à la mise en œuvre du service MCData IPCON. Les clients MCData 220 permettent la communication bidirectionnelle de données IP 200 avec le soutien du service de connectivité IP qui constitue ainsi la passerelle vers les hôtes 210 ou serveurs de données 210. Le client MCData 220 émetteur demande au service de transport MCData 230 une exigence de qualité de service et la priorité de communication associées. Le tunnel IP « Internet Protocol » 240 entre les deux clients MCData 220 est un tunnel de routage IP de données 200, notamment des données média. Chacun des deux clients MCData 220 est connecté 250 au service de transport MCData 230.

Il faut noter qu'un client MCData, qui prend en charge les capacités de connectivité IP, est en mesure d'interdire les demandes de connectivité IP entrantes, soit à la demande, soit en fournissant une liste d'origines exclues identifiées par l'identifiant MCData et, si possible, par l'alias fonctionnel.

Les spécifications actuelles, définies dans le document de spécifications techniques TS 23.282 du standard 3GPP pour les communications MCData IPCON comprennent l'établissement et la suppression d'un tunnel IP 240 entre deux clients MCData 220.

Aucune sécurité n'est pour l'instant prévue pour le tunnel IP entre deux clients MCData. Ainsi, à l'heure actuelle, la sécurité des données 200 transportées à travers le tunnel IP 240 s'appuie sur la sécurité des données appliquée par les serveurs applicatifs 210.

Toutefois, la sécurité des données appliquée par les serveurs applicatifs 210 n'est parfois pas suffisante voire totalement absente. Pour l'instant, aucune solution n'a été trouvée concernant les communications MCData IPCON dans les documents de spécifications techniques TS 23.282 du standard 3GPP dédié à l'architecture fonctionnelle et les procédures et TS 24.282 du standard 3GPP de stage 3 dédié au protocole et à l'implémentation.

Il existe donc un besoin de fournir un procédé respectant les spécifications 3GPP R17 proposant une sécurité des communications MCData IPCON. En d'autres termes, une sécurité du contenu à transporter de bout en bout entre les clients MCData mettant en œuvre le tunnel IP doit être fournie. De plus, cette sécurité doit être activable et désactivable.

Le procédé doit aussi permettre la gestion de données média. Le tunnel IP, établi sur le plan média entre des clients MCData IP, permet d'échanger des données média entre des entités applicatives externes. Les clients MCData IP doivent donc pouvoir contrôler l'accès à ce tunnel IP : ceci est fait sur le plan de contrôle MCData au préalable et sur le plan média en sécurisant les données transitant par ce tunnel IP.

Afin d'assurer la gestion de données média, le procédé doit être compatible avec des tunnels GRE in UDP comme préconisé dans le document de spécifications techniques TS 24.582 du standard 3GPP concernant la gestion des données média à la clause 13.4. L'encapsulation GRE dans UDP est décrite dans le document IETF RFC 8086 « Internet Engineering Task Force Request for Comments: 8086 ». Le format d'encapsulation GRE-in-UDP contient un entête UDP et un entête GRE. Il faut noter que ces éléments d'entête ne doivent pas être altérés par le procédé permettant la sécurité des communications MCData IPCON.

Enfin, à l'heure actuelle, les communications MCData IPCON concernent uniquement les communications de point à point. Ainsi, les communications MCData IPCON de groupe n'existent pas. Un groupe peut être défini comme étant un groupe virtuel regroupant plusieurs dispositifs utilisateurs pouvant interagir entre eux une fois autorisés par le réseau de communication, par exemple authentifiés à un serveur de gestion de groupe du réseau de communication, permettant ainsi l'accès au groupe de communication.

Ainsi, l'invention vise à fournir un procédé permettant d'établir des communications MCData IPCON sécurisées de bout en bout, à la fois pour les communications de point à point et les communications de groupe.

### RESUME DE L'INVENTION

L'invention offre une solution aux problèmes évoqués précédemment, en définissant un mécanisme de génération, de distribution et de dérivation de clés pour le service MCData IPCON, ainsi qu'un mécanisme de chiffrement du contenu MCData IPCON.

Un aspect de l'invention concerne un procédé d'établissement de session MCData IPCON « Mission Critical Data IP Connectivity » dans un réseau de communication selon le standard 3GPP MCS « 3rd Generation Partnership Program Mission Critical System », le réseau comprenant :
- une entité MCData émettrice ;
- une entité MCData destinataire ; et
- un service de transport MCData connecté aux entités MCData émettrice et destinataire ;
le procédé comprenant :
- obtenir, par l'entité MCData émettrice, une clé DPPK « MCData Payload Protection Key » et un identifiant de la clé DPPK-ID « MCData Payload Protection Key Identifier »;
- transmettre, par l'entité MCData émettrice à l'entité MCData destinataire via le service de transport MCData un message SIP-INVITE comprenant la clé DPPK et l'identifiant de la clé DPPK-IK ;
- authentifier, par l'entité MCData destinataire, le message ;
- déterminer, par l'entité MCData destinataire, la clé DPPK et l'identifiant de la clé DPPK-ID et établir un tunnel IP entre l'entité MCData émettrice et l'entité MCData destinataire.

Grâce à l'invention, la sécurité de bout en bout est assurée entre deux entités MCData dans une communication IPCON. Ainsi, même si le contenu à envoyer n'est pas sécurisé par les serveurs applicatifs lorsque celui-ci est reçu par l'entité émettrice, l'invention permettra de sécuriser la transmission du contenu entre l'entité émettrice et l'entité destinataire.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :
- Procédé selon l'invention dans lequel l'entité MCData émettrice est connectée à une entité applicative émettrice et l'entité MCData destinataire est connectée à au moins une entité applicative destinataire, le procédé comprenant en outre, les étapes finales :
   - Transmettre, par l'entité applicative émettrice, des données utiles à l'entité MCData émettrice.
   - Générer, par l'entité MCData émettrice, un paquet de données comprenant :
      o les données utiles chiffrées en utilisant la clé DPPK et l'identifiant de la clé DPPK-ID ; et
      o un entête ;
   - Envoyer, par l'entité MCData émettrice, le paquet de données généré à l'entité MCData destinataire via le tunnel IP établi ;
   - Retirer, par l'entité MCData destinataire, l'entête du paquet de données généré et déchiffrer les données utiles chiffrées en utilisant la clé DPPK et l'identifiant de la clé DPPK-ID ; et
   - Transmettre, par l'entité MCData destinataire, les données utiles déchiffrées à la au moins une entité applicative destinataire.
- Procédé selon l'invention dans lequel :
   - le tunnel IP est un tunnel GRE « Generic Routing Encapsulation » dans le protocole UDP « User Datagram Protocol » ; et
   - l'entête est un entête de type GRE et UDP.
- Procédé selon l'invention comprenant en outre les étapes préalables :
   - obtenir des informations
      o d'autorisation d'établissement de session MCData IPCON, configurée avec un plan média MCData, entre l'entité MCData émettrice et l'entité MCData destinataire ; et
      o de la nécessité de mettre en place le procédé selon l'invention ; et
   - Mettre en œuvre le procédé d'établissement de session MCData IPCON « Mission Critical Data IP Connectivity » selon l'invention lorsque l'établissement de session MCData IPCON, configurée avec le plan média MCData, entre l'entité MCData émettrice et l'entité MCData destinataire est autorisé et si la mise en place du procédé selon l'invention est nécessaire.
- Procédé selon l'invention dans lequel :
   - ledit procédé est un procédé d'établissement de session MCData IPCON de groupe ;
   - l'entité MCData émettrice est un client MCData appartenant à un groupe MCData ;
   - l'entité MCData destinataire est un ensemble de clients MCData appartenant à un même groupe MCData que l'entité MCData émettrice ; et
   - la clé DPPK est une clé de type GMK « Group Master Key » et l'identifiant de la clé DPPK-ID est de type GMK-ID « Group Master Key Identifier ».
- Procédé dans lequel :
   - ledit procédé est un procédé d'établissement de session MCData IPCON point à point ;
   - l'entité MCData émettrice et l'entité MCData destinataire sont des clients MCData ; et
   - la clé DPPK est une clé privée de type PCK « Private Call Key » et l'identifiant de la clé DPPK-ID est de type PCK-ID « Private Call Key Identifier » et la clé PCK comprenant le chiffrement de l'identité de l'entité MCData destinataire ;
   - une étape initiale d'obtention , par l'entité MCData émettrice et l'entité MCData destinataire, des éléments de chiffrement ;
   - l'obtention à l'étape, par l'entité MCData émettrice, de la clé PCK et de l'identifiant de la clé PCK-ID consiste en une génération de la clé PCK et de l'identifiant PCK-ID en utilisant les éléments de chiffrement obtenus à l'étape;
   - le message SIP-INVITE transmis à l'étape par l'entité MCData émettrice à l'entité MCData destinataire, comprend un conteneur MIKEY-SAKKE I-MESSAGE « Multimedia Internet KEYing-Sakai-Kasahara Key Encryption », le conteneur MIKEY-SAKKE I-MESSAGE comprenant la clé DPPK chiffrée avec une méthode de chiffrement SAKKE ; et l'identifiant de la clé DPPK-ID ; et
   - la détermination par l'entité MCData destinataire, de la clé PCK et de l'identifiant de la clé PCK-ID est effectué en utilisant les éléments de chiffrement obtenus à l'étape initiale.

Un autre aspect de l'invention concerne un réseau de communication selon le standard 3GPP MCS « 3rd Generation Partnership Program Mission-Critical System », le réseau de communication comprenant :
- une entité MCData émettrice ;
- une entité MCData destinataire ;
- un service de transport MCData connecté aux entités MCData émettrice et destinataire ;
le réseau de communication étant configuré pour mettre en œuvre le procédé selon l'invention.

Outre les caractéristiques qui viennent d'être évoquées dans le paragraphe précédent, le réseau de communication selon un aspect de l'invention peut présenter la caractéristique suivante :
- réseau selon l'invention dans lequel l'entité MCData destinataire est :
   - un ensemble de clients MCData appartenant au même groupe MCData que l'entité MCData émettrice ; ou
   - un client MCData.

Selon un troisième aspect de l'invention, il est proposé un produit programme d'ordinateur comprenant des instructions qui conduisent le système selon l'invention à exécuter le procédé selon l'invention.

Selon un quatrième aspect de l'invention, il est proposé un support lisible par ordinateur, sur lequel est enregistré le programme d'ordinateur selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un système pour la mise en œuvre du service MCData IPCON de l'art antérieur.
- La figure 2 est un schéma synoptique illustrant l'enchaînement des étapes du procédé selon l'invention.
- Les figures 3 et 4 sont des schémas synoptiques illustrant l'enchaînement des étapes du procédé selon deux variantes de l'invention.
- La figure 5 montre une représentation schématique d'un système configuré pour la mise en œuvre du service MCData IPCON selon l'invention.
- La figure 6 montre une représentation schématique d'un système configuré pour la mise en œuvre du service MCData IPCON de groupe selon un mode d'implémentation de l'invention.

### DESCRIPTION DETAILLEE

Sauf précision contraire, un même élément apparaissant sur des figures différentes présente une référence unique.

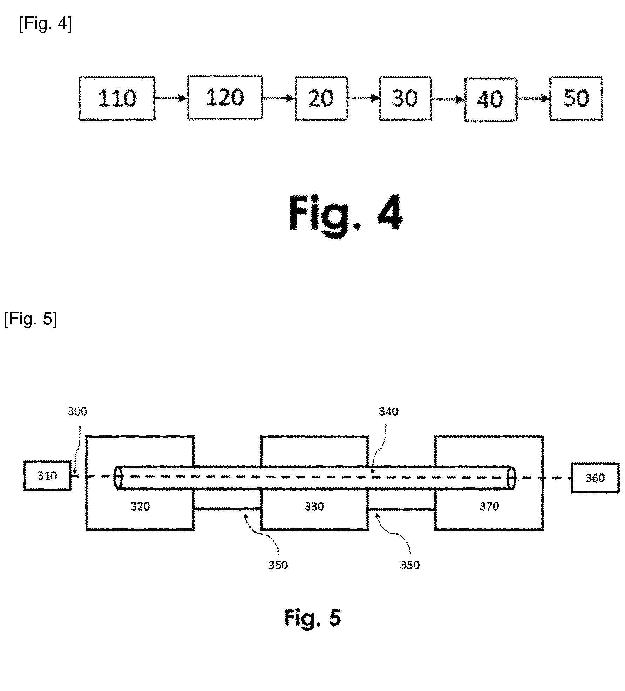

La figure 5 est une représentation schématique d'un procédé d'établissement de session MCData IPCON « Mission Critical Data IP Connectivity » selon l'invention. L'entité MCData émettrice 320 et l'entité MCData destinataire 370 sont connectées 350 au service de transport MCData 330. Le service de transport MCData 330 comprend un ou plusieurs serveurs MCData. L'entité MCData émettrice 320 est connectée à une entité applicative émettrice 310. L'entité applicative émettrice 310 est par exemple un serveur applicatif émetteur. L'entité MCData destinataire 370 est connectée à une entité applicative destinataire 360. L'entité applicative destinataire 360 est par exemple un serveur applicatif destinataire. Le tunnel IP 340 permet le routage IP de données 300, notamment des données média de l'entité applicative émettrice 310 à l'entité applicative destinataire 360 en passant par les entités MCData 320 et 370.

Le réseau de communication de la figure 5 est configuré pour mettre en œuvre le service MCData IPCON. Les entités MCData émettrice 320 et destinataire 370 sont interchangeables, c'est-à-dire qu'une entité MCData peut être émettrice 320 sur une période puis destinataire 370 sur une autre période. Chacune de ces entités MCData a une identité au sein du réseau de communication. Cette identité permet d'identifier l'entité au sein du réseau de communication. Par exemple, l'identité peut être un identifiant unique au sein du réseau de communication.

La figure 2 est un schéma synoptique illustrant l'enchaînement des étapes du procédé selon l'invention.

Dans une première étape 20, l'entité MCData émettrice 320 obtient une clé DPPK « MCData Payload Protection Key » et un identifiant de la clé DPPK-ID « MCData Payload Protection Key Identifier ». L'obtention de la clé DPPK peut consister en une réception de la clé DPPK et de l'identifiant DPPK-ID. L'obtention de la clé DPPK peut aussi consister en une génération de la clé DPPK en utilisant les éléments de chiffrement. Il faut noter que la clé DPPK n'est pas un type de clé particulier. En effet le terme DPPK regroupe les types de clés existants dans MCData, par exemple une clé privée PCK « Private Call Key » et une clé GMK « Group Master Key », utilisées pour la protection dans le procédé MCData respectivement pour les communications point-à-point et pour les communications de groupe. Par conséquent, plusieurs clés DPPK peuvent être utilisées dans un procédé 1 d'établissement de session MCData IPCON en fonction du canal de communication. De plus, bien qu'une clé privée PCK et une clé GMK puissent toutes deux être utilisées comme clé DPPK pour protéger le procédé MCData dans différents canaux, la clé privée PCK et la clé GMK ne sont pas la même clé et ne seront pas utilisées dans les mêmes canaux.

Le procédé 1 selon l'invention comprend une seconde étape de transmission 30, par l'entité MCData émettrice 320 à l'entité MCData destinataire 370 via le service de transport MCData, d'un message SIP-INVITE comprenant la clé DPPK et l'identifiant de la clé DPPK-IK.

La transmission 30 s'effectue selon le protocole SDP « Session Description Protocol ». Le protocole SDP est un protocole de communication de description de paramètres d'initialisation d'une session de diffusion en flux. Le protocole SDP ne comprend pas la livraison du média. Il est utilisé par l'émetteur et le destinataire pour la négociation du type et du format du média, et les propriétés associées. La transmission 30 s'effectue par l'embarquement d'une charge SDP dans le corps d'un message SIP INVITE. Le message SIP INVITE est envoyé par l'entité MCData émettrice 320 à l'entité MCData destinataire 370. L'entité MCData destinataire 370 répond ensuite si elle accepte ou non l'établissement d'une session MCData IPCON avec l'entité MCData émettrice 320.

Dans une troisième étape 40, l'entité MCData destinataire 370 authentifie le message SIP-INVITE. L'authentification a pour finalité de vérifier que le message SIP-INVITE provient bien de l'entité MCData émettrice et qu'il n'est pas corrompu. L'authentification peut être facilitée par des procédures d'authentification effectuées préalablement à la mise en œuvre du procédé selon l'invention. Ainsi, dans ce cas, l'authentification peut consister à vérifier que le message a bien été envoyé par l'entité MC Data émettrice. L'authentification peut aussi consister à vérifier la signature d'un élément contenu dans le message. La validité de la signature peut être déterminée en vérifiant que l'identité de l'entité MCData émettrice 320 existe dans la liste des identités de confiance de l'entité MCData destinataire 370 et l'intégrité du document.

Le procédé 1 selon l'invention comprend une dernière étape de détermination 50, par l'entité MCData destinataire 370, de la clé DPPK et l'identifiant de la clé DPPK-ID.

La figure 3 est un schéma synoptique illustrant l'enchaînement des étapes du procédé selon une variante de l'invention. Dans cette variante, le procédé comprend en outre des étapes finales 60, 70, 80, 90 et 100. Cette variante permet l'envoi sécurisé de bout en bout de données entre deux entités applicatives. Chaque entité applicative est par exemple un serveur applicatif. Une première entité applicative 310 est connectée à une entité MCData émettrice 320 et une seconde entité applicative 360 est connectée à une entité MCData destinataire 370.

A l'étape 60, l'entité applicative émettrice 310 transmet des données utiles à l'entité MCData émettrice 320. Ces données utiles peuvent être chiffrées ou non.

Ensuite, l'entité MCData émettrice 320 génère à une étape 70 un paquet de données comprenant les données utiles chiffrées en utilisant la clé DPPK et l'identifiant de la clé DPPK-ID et un entête. Ainsi, avant la génération 70, les données utiles sont chiffrées. Afin d'effectuer le chiffrement, une dérivation de la clé DPPK peut être nécessaire. Par exemple, la clé DPPK est hachée par une fonction de dérivation de clé pour produire une clé de chiffrement DPCK « MCData Payload Cipher Key » des données utiles. Un exemple de format de données protégées compatible avec l'invention est décrit à la clause 8.5.4.1 dans le document de spécifications techniques TS 33.180 du standard 3GPP.

L'étape 80 consiste à envoyer, par l'entité MCData émettrice 320, le paquet de données généré 70 à l'entité MCData destinataire 370. L'entité MCData destinataire 370 retire ensuite à une étape 90 l'entête du paquet de données généré à l'étape 70 et déchiffre les données utiles chiffrées en utilisant la clé DPPK et l'identifiant de la clé DPPK-ID. Enfin, l'entité MCData destinataire 370 transmet à une étape 100 les données utiles déchiffrées à l'entité applicative destinataire 360. Il faut noter que les serveurs MCData du service de transport MCData 330 assurent le transport entre l'entité MCData émettrice 320 et l'entité MCData destinataire 370. Ces serveurs MCData pourront notamment utiliser l'entête du paquet de données généré à l'étape 70 pour identifier l'entité MCData destinataire 370.

Dans une variante compatible avec la variante décrite ci-dessus, le tunnel IP 340 est un tunnel GRE « Generic Routing Encapsulation » dans le protocole UDP « User Datagram Protocol » et l'entête est un entête de type GRE et UDP. Le tunnel GRE in UDP est configuré entre l'entité MCData émettrice 320 et l'entité MCData destinataire 370, chaque entité MCData 320 et 370 agissant comme une extrémité du tunnel IP 340. Les entités MCData 320 et 370 sont configurées pour envoyer et recevoir les paquets GRE directement entre eux. Les serveurs MCData du système de transport MCData 330 situés entre ces deux entités MCData 320 et 370 n'ouvriront pas les paquets de données encapsulés. Ils ne se réfèreront qu'aux entêtes entourant les paquets encapsulés pour pouvoir les transmettre. Ainsi, cette encapsulation permet notamment de ne pas affecter la sécurité des paquets de données encapsulés.

La figure 4 est un schéma synoptique illustrant l'enchaînement des étapes du procédé selon une variante de l'invention. Dans cette variante, compatible avec les variantes précédentes, le procédé comprend en outre les étapes préalables 110 et 120. A l'étape 110, l'entité MCData émettrice 320 et l'entité MCData destinataire 370 obtiennent 110 des informations d'autorisation d'établissement de session MCData IPCON, configurée avec un plan média MCData, entre l'entité MCData émettrice et l'entité MCData destinataire 370 et des informations concernant la nécessité de mettre en place un procédé assurant la sécurité des données envoyées. Les informations concernant la nécessité de mettre en place le procédé assurant la sécurité des données envoyées peuvent donc être utilisées pour activer ou désactiver la mise en place du procédé par exemple en fonction de la sécurité des données appliquées par les serveurs applicatifs.

Le service MCData IPCON fournit un plan média pour l'échange de tout type de données IP entre des applications IP. Ces applications IP peuvent résider sur des hôtes externes au réseau 3GPP connectés par une interface IP à l'entité MCData ou peuvent être exécutées directement par l'entité MCData. Un plan média pouvant être utilisé dans l'invention est détaillé dans le document de spécifications techniques TS 24.582.

Les informations d'autorisation d'établissement de session MCData IPCON et concernant la nécessité de mettre en place le procédé assurant la sécurité des données envoyées peuvent être insérées dans le document de profil des entités MCData émettrice et destinataire.

En fonction de ces informations, le procédé est mis en œuvre à une étape 120 ou non. Ainsi si les informations autorisent l'établissement de session MCData IPCON, configurée avec un plan média MCData, entre l'entité MCData émettrice 320 et l'entité MCData destinataire 370 et confirme la nécessité de mettre en place le procédé assurant la sécurité des données envoyées, alors le procédé selon, l'invention est mis en œuvre à une étape 120.

Dans un premier mode d'implémentation, le procédé selon l'invention est un procédé d'établissement de session MCData IPCON de groupe. L'entité MCData émettrice est un client MCData émetteur 420 appartenant à un groupe MCData 480, l'entité MCData destinataire est un ensemble de clients MCData destinataires 470 appartenant à un même groupe MCData 480 que le client MCData émetteur 420, la clé DPPK est une clé de type GMK « Group Master Key » et l'identifiant de la clé DPPK-ID est de type GMK-ID « Group Master Key Identifier ».

Dans ce premier mode d'implémentation, la clé GMK et l'identifiant de la clé GMK-ID sont obtenues à l'étape 20. Cette obtention par l'entité MCData émettrice consiste à recevoir la clé GMK et l'identifiant de la clé GMK-ID. La clé GMK et l'identifiant de la clé GMK-ID peuvent être fournis par un serveur GMS « Group Master Server ».

A l'étape 30, la transmission du conteneur s'effectue d'un client MCData émetteur 420 vers les autres membres du groupe qui sont donc des clients MCData destinataires 470.

Ensuite, à l'étape 40, chaque client MCData destinataire authentifie le message SIP-INVITE en vérifiant que le conteneur a bien pour origine le client appartenant au même groupe. Dans ce premier mode d'implémentation, l'authentification est facilitée par des procédures d'authentification effectuées préalablement à la mise en œuvre du procédé selon l'invention. Ainsi, dans ce cas, l'authentification peut consister à vérifier que le message a bien été envoyé par l'entité MC Data émettrice par exemple en accédant à un sous élément du document de groupe qui comporte toutes les informations relatives au groupe. Enfin, à l'étape 50, le client MCData destinataire détermine la clé GMK et l'identifiant de la clé GMK-ID. Par exemple, le message SIP-INVITE peut contenir un identifiant de groupe, par exemple une adresse URL « Uniform Resource Locator », qui permet d'accéder à un document de groupe contenant le GMK et GMK ID.

Une fois la session de communication de groupe établie, un client MCData émetteur qui souhaite transmettre un paquet de données vers les autres membres du groupe doit chiffrer ce paquet de données. Un exemple de chiffrement utilisable dans l'invention est celui décrit dans le document de spécifications techniques TS 33.180, avec notamment une dérivation de la clé GMK telle que définie dans la clause 8.5.3 et un format de données protégées décrit dans la clause 8.5.4.1 dans le document de spécifications techniques TS 33.180, avant de lui ajouter les entêtes nécessaires. Un exemple d'entête utilisable est un entête GRE et UDP. Ensuite, de manière optionnelle, les clients MCData destinataires 470 effectuent l'opération inverse avant de transmettre le paquet déchiffré au data host visé.

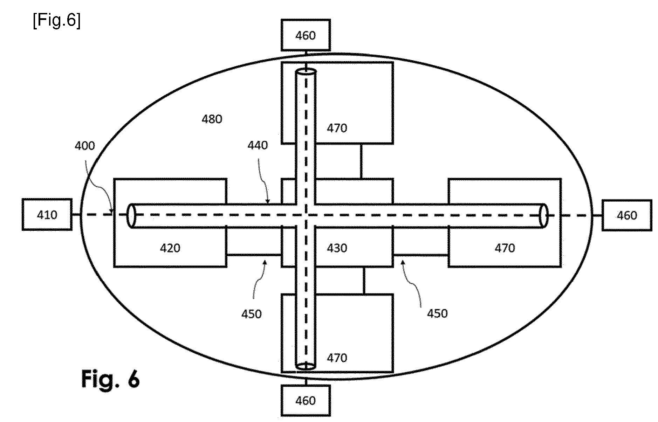

La figure 6 est une représentation schématique d'un système pouvant servir à la mise en œuvre de ce premier mode d'implémentation. Le client MCData émetteur 420 et les clients MCData destinataires 470 appartiennent au même groupe MCData 480. Chaque client MCData 420 et 470 est connecté 450 au service de transport MCData 430. Le service de transport MCData 430 comprend un ou plusieurs serveurs MCData Le client MCData 420 est connecté à une entité applicative émettrice 410. Chaque client MCData destinataire 470 est connecté à une entité applicative destinataire 460. Le tunnel IP 440 permet le routage IP de données 400, notamment des données média, de l'entité applicative 410 aux entités applicatives 460.

Dans un second mode d'implémentation, le procédé selon l'invention est un procédé d'établissement de session MCData IPCON point à point. L'entité MCData émettrice 320 et l'entité MCData destinataire 370 sont des clients MCData. La clé DPPK est une clé privée de type PCK « Private Call Key » et l'identifiant de la clé DPPK-ID est de type PCK-ID « Private Call Key Identifier ».

Dans la première étape 10, les clients MCData émetteur 320 et destinataire 370 obtiennent des éléments de chiffrement. Ces éléments de chiffrement permettent l'obtention et la détermination de la clé PCK et de l'identification de la clé PCK-ID. Ces éléments de chiffrement peuvent être fournis par un serveur KMS « Key Management Server ». Les éléments de chiffrement venant du serveur KMS sont par exemple la clé privée SSK « Secret Signing Key », la clé publique « Public Validation Token » PVT ou la clé d'authentification publique KPAK «KMS Public Authentication Key »."

Dans la seconde étape 20, le client MCData émetteur obtient une clé privée PCK et un identifiant de la clé privée PCK-ID. Cette obtention consiste à générer la clé privée PCK et l'identifiant de la clé privée PCK-ID en utilisant les éléments de chiffrement obtenus à l'étape 10. Afin d'effectuer le chiffrement, une dérivation de la clé PCK peut être nécessaire. Un exemple de dérivation utilisable dans l'invention est défini dans la clause 8.3 du document de spécifications techniques TS 33.180.

La clé PCK obtenue à l'étape 20 comprend le chiffrement de l'identité de l'entité MCData destinataire 370. Ainsi la clé PCK permet, après extraction, d'obtenir l'entité MCData destinataire 370.

Dans la troisième étape 30, le MCData émetteur transmet la clé privée PCK et l'identifiant de la clé privée PCK-ID dans le message SIP-INVITE. Le message SIP-INVITE comprend un conteneur MIKEY-SAKKE I-MESSAGE « Multimedia Internet KEYing-Sakai-Kasahara Key Encryption », le conteneur MIKEY-SAKKE I-MESSAGE comprenant la clé DPPK chiffrée avec une méthode de chiffrement SAKKE ; et l'identifiant de la clé DPPK-ID.

Le conteneur MIKEY-SAKKE I-MESSAGE est notamment utilisé pour transporter la clé DPPK. La clé DPPK peut par exemple être d'une longueur de 16 octets. La clé DPPK est encapsulée dans le conteneur avec une méthode de chiffrement SAKKE. Un exemple d'implémentation des messages MIKEY-SAKKE I-MESSAGE adaptés pour la mise en œuvre de l'invention est défini dans le document IETF RFC 6509 « Internet Engineering Task Force Request for Comments : 6509 ».

L'authentification du message SIP-INVITE peut consister à valider la signature du message SIP-INVITE. La signature du message SIP-INVITE consiste à signer le conteneur. Le conteneur signé permet au client MCData destinataire d'authentifier le conteneur en validant la signature. Par exemple, le conteneur est signé à l'aide d'une signature permettant d'authentifier l'origine du conteneur par le client MCData destinataire.

La transmission du conteneur s'effectue d'un client MCData émetteur vers un client MCData destinataire. Le message MIKEY-SAKKE I-MESSAGE comprend la clé privée PCK. Un exemple de structure possible du message MIKEY-SAKKE I-MESSAGE pour ce mode de réalisation est décrit à l'annexe E.3 dans le document de spécifications techniques TS 33.180.

Dans la quatrième étape 40, le client MCData destinataire authentifie le conteneur comprenant le message MIKEY-SAKKE I-MESSAGE en validant la signature de l'appelant.

Dans la cinquième étape 50, le client MCData destinataire détermine la clé privée PCK et l'identifiant de la clé privée PCK-ID. La détermination est effectuée par extraction en utilisant les éléments de chiffrement obtenus à l'étape 10

Le trafic subséquent sur la session MCData IPCON établie, c'est-à-dire le contenu envoyé par une entité applicative émettrice à une autre entité applicative destinataire, est chiffré par le MCData client émetteur et déchiffré par le MCData destinataire en utilisant la clé PCK. Un exemple de chiffrement et de déchiffrement utilisables pour une implémentation de l'invention sont décrits dans le document de spécifications techniques TS 33.180, avec notamment une dérivation de la clé PCK tel que défini dans la clause 8.5.3 et un format de données protégées décrit dans la clause 8.5.4.1 dans le document de spécifications techniques TS 33.180, avant de lui ajouter les entêtes nécessaires. Ce contenu chiffré est transporté dans le tunnel établi entre les deux clients MCData par exemple un tunnel GRE in UDP. Ainsi, après avoir chiffré le contenu reçu de l'entité applicative émettrice, le client MCData émetteur ajoute un entête par exemple un entête GRE et UDP avant de transmettre le paquet de données au client MCData destinataire, qui retire ces entêtes ajoutés avant de déchiffrer le contenu puis de transmettre le contenu déchiffré à l'entité applicative destinataire.

## Revendications

1. Procédé (1) d'établissement de session MCData IPCON, Mission Critical Data Internet Protocol Connectivity, de groupe dans un réseau de communication selon le standard 3GPP MCS, 3rd Generation Partnership Program Mission Critical System, le réseau comprenant :
- une entité MCData émettrice est un client MCData appartenant à un groupe MCData et est connectée à une entité applicative émettrice ;
- une entité MCData destinataire est un ensemble de clients MCData appartenant à un même groupe MCData que l'entité MCData émettrice et est connectée à une entité applicative destinataire ; et
- un service de transport MCData connecté aux entités MCData émettrice et destinataire ;
le procédé comprenant :
- Obtenir (20), par l'entité MCData émettrice, une clé DPPK, MCData Payload Protection Key, de type GMK, Group Master Key, et un identifiant de la clé DPPK-ID, MCData Payload Protection Key Identifier, de type GMK-ID, Group Master Key Identifier, fournis par un serveur GMS, Group Master Server;
- Transmettre (30), par l'entité MCData émettrice à l'entité MCData destinataire via le service de transport MCData, un message SIP-INVITE comprenant la clé DPPK et l'identifiant de la clé DPPK-IK ;
- Authentifier (40), par l'entité MCData destinataire, le message ; et
- Déterminer (50), par l'entité MCData destinataire, la clé DPPK et l'identifiant de la clé DPPK-ID et établir un tunnel GRE « Generic Routing Encapsulation » entre l'entité MCData émettrice et l'entité MCData destinataire, le tunnel GRE « Generic Routing Encapsulation » étant établis dans un protocole UDP « User Datagram Protocol »,
- Transmettre (60), par l'entité applicative émettrice, des données utiles à l'entité MCData émettrice,
- Générer (70), par l'entité MCData émettrice, un paquet de données comprenant :
- les données utiles chiffrées en utilisant la clé DPPK et l'identifiant de la clé DPPK-ID ; et
- un entête de type GRE et UDP ;
- Envoyer (80), par l'entité MCData émettrice, le paquet de données généré (70) à l'entité MCData destinataire via le tunnel GRE établi ;
- Retirer (90), par l'entité MCData destinataire, l'entête du paquet de données généré (70) et déchiffrer les données utiles chiffrées en utilisant la clé DPPK et l'identifiant de la clé DPPK-ID ; et
- Transmettre (100), par l'entité MCData destinataire, les données utiles déchiffrées à l'entité applicative destinataire.

2. Procédé selon l'une quelconque des revendications précédentes comprenant en outre les étapes préalables:
- Obtenir (110) des informations :
- d'autorisation d'établissement de session MCData IPCON, configurée avec un plan média MCData, entre l'entité MCData émettrice et l'entité MCData destinataire ; et
- de la nécessité de mettre en place le procédé selon l'une quelconque des revendications précédentes ; et
- Mettre en œuvre (120) le procédé de la revendication 1 lorsque l'établissement de session MCData IPCON, configurée avec le plan média MCData, entre l'entité MCData émettrice et l'entité MCData destinataire est autorisé et si la mise en place du procédé selon l'une quelconque des revendications précédentes est nécessaire.

3. Procédé selon les revendications 1 ou 2 dans lequel :
- Ledit procédé est un procédé d'établissement de session MCData IPCON point à point ;
- L'entité MCData émettrice et l'entité MCData destinataire sont des clients MCData ; et
- La clé DPPK est une clé privée de type PCK « Private Call Key », l'identifiant de la clé DPPK-ID est de type PCK-ID « Private Call Key Identifier » et la clé PCK comprenant le chiffrement de l'identité de l'entité MCData destinataire ;
- Une étape initiale d'obtention (10), par l'entité MCData émettrice et l'entité MCData destinataire, des éléments de chiffrement ;
- L'obtention à l'étape (20), par l'entité MCData émettrice, de la clé PCK et de l'identifiant de la clé PCK-ID consiste en une génération de la clé PCK et de l'identifiant PCK-ID en utilisant les éléments de chiffrement obtenus à l'étape (10);
- Le message transmis à l'étape (30) par l'entité MCData émettrice à l'entité MCData destinataire, comprend un conteneur MIKEY-SAKKE I-MESSAGE « Multimedia Internet KEYing-Sakai-Kasahara Key Encryption », le conteneur MIKEY-SAKKE I-MESSAGE comprenant la clé DPPK chiffrée avec une méthode de chiffrement SAKKE ; et l'identifiant de la clé DPPK-ID ; et
- La détermination (50) par l'entité MCData destinataire, de la clé PCK et de l'identifiant de la clé PCK-ID est effectuée en utilisant les éléments de chiffrement obtenus à l'étape 10.

4. Réseau de communication selon le standard 3GPP MCS « 3rd Generation Partnership Program Mission-Critical System », le réseau de communication comprenant:
- Une entité MCData émettrice ;
- Une entité MCData destinataire ; et
- Un service de transport MCData connecté aux entités MCData émettrice et destinataire ;
le réseau de communication étant configuré pour mettre en œuvre le procédé (1) selon l'une quelconque des revendications précédentes.

5. Réseau selon la revendication précédente **caractérisé en ce que** l'entité MCData destinataire est :
- Un ensemble de clients MCData appartenant au même groupe MCData que l'entité MCData émettrice ; ou
- Un client MCData.

6. Produit programme d'ordinateur comprenant des instructions qui conduisent le réseau selon la revendication 5 ou 6 à exécuter les étapes de la méthode selon l'une des revendications 1 à 4.

7. Support lisible par ordinateur, sur lequel est enregistré le programme d'ordinateur selon la revendication 7.

## Patentansprüche

1. Verfahren (1) zum Einrichten einer MCData IPCON-Sitzung "Mission Critical Data Internet Protocol Connectivity" für eine Gruppe in einem Kommunikationsnetzwerk gemäß dem Standard 3GPP MCS "3rd Generation Partnership Program Mission Critical System" wobei das Netzwerk umfasst:
- eine sendende MCData-Einheit, die ein MCData-Client ist, der zu einer MCData-Gruppe gehört und mit einer sendenden Anwendungseinheit verbunden ist;
- eine empfangende MCData-Einheit, die eine Gruppe von MCData-Clients ist, die derselben MCData-Gruppe angehört wie die sendende MCData-Einheit, und die mit einer empfangenden Anwendungseinheit verbunden ist; und
- einem MCData-Transportdienst, der mit der sendenden und der empfangenden MCData-Einheit verbunden ist.
Das Verfahren umfasst:
- Erhalten (20) durch die sendende MCData-Einheit eines DPPK-Schlüssels, MCData Payload Protection Key, vom Typ GMK, Group Master Key, und einer Kennung des DPPK-Schlüssels, DPPK-ID, "MCData Payload Protection Key Identifier", vom Typ GMK-ID, Group Master Key Identifier, die von einem GMS-Server "Group Master Server" bereitgestellt werden;
- Übermitteln (30) einer SIP-INVITE-Nachricht, die den DPPK-Schlüssel und die DPPK-IK-Kennung enthält, durch die sendende MCData-Einheit an die empfangende MCData-Einheit über den MCData-Transportdienst;
- Authentifizieren (40) der Nachricht durch die empfangende MCData-Einheit; und
- Bestimmen (50) durch die empfangende MCData-Einheit des DPPK-Schlüssels und der Kennung des DPPK-Schlüssels DPPK-ID und Einrichtung eines GRE-Tunnels "Generic Routing Encapsulation" zwischen der sendenden MCData-Einheit und der empfangenden MCData-Einheit, wobei der GRE-Tunnel "Generic Routing Encapsulation" in einem UDP-Protokoll "User Datagram Protocol" eingerichtet wird,
- Übertragen (60) der Nutzdaten durch die sendende Anwendungseinheit an die sendende MCData-Einheit,
- Erzeugen (70) eines Datenpakets durch die sendende MCData-Einheit, das Folgendes umfasst:
- die unter Verwendung des Schlüssels DPPK und der Schlüsselkennung DPPK-ID verschlüsselten Nutzdaten; und
- einen Header vom Typ GRE und UDP;
- Senden (80) des erzeugten Datenpakets (70) durch die sendende MCData-Einheit an die empfangende MCData-Einheit über den eingerichteten GRE-Tunnel;
- Entfernen (90) des Headers des generierten Datenpakets (70) durch die empfangende MCData-Einheit und Entschlüsseln der verschlüsselten Nutzdaten unter Verwendung des DPPK-Schlüssels und der Schlüsselkennung DPPK-ID; und
- Übertragen (100) der entschlüsselten Nutzdaten durch die empfangende MCData-Einheit an die empfangende Anwendungseinheit.

2. Verfahren nach einem der vorstehenden Ansprüche, das zusätzlich die folgenden vorbereitenden Schritte umfasst:
- Erhalten (110) von Informationen:
- zur Autorisierung der Einrichtung einer MCData-IPCON-Sitzung, die mit einem MCData-Medienplan konfiguriert ist, zwischen der sendenden MCData-Einheit und der empfangenden MCData-Einheit; und
- über die Notwendigkeit, das Verfahren gemäß einem der vorstehenden Ansprüche einzurichten; und
- Durchführen (120) des Verfahrens gemäß Anspruch 1, wenn die Einrichtung einer IPCON-MCData-Sitzung, die mit dem MCData-Medienplan konfiguriert ist, zwischen der sendenden MCData-Einheit und der empfangenden MCData-Einheit autorisiert ist und wenn die Einrichtung des Verfahrens gemäß einem der vorhergehenden Ansprüche erforderlich ist.

3. Verfahren nach Anspruch 1 oder 2, bei dem:
- das Verfahren ein Punkt-zu-Punkt-MCData-IPCON-Sitzungsaufbauverfahren ist;
- die sendende MCData-Einheit und die empfangende MCData-Einheit MCData-Clients sind; und
- der DPPK-Schlüssel ein privater Schlüssel vom Typ PCK "Private Call Key" ist, die Kennung des DPPK-Schlüssels DPPK-ID vom Typ PCK-ID "Private Call Key -Identifier" ist und der PCK-Schlüssel die Verschlüsselung der IdEinheit der empfangenden MCData-Einheit umfasst;
- Ein erster Schritt (10) zum Erhalt der Verschlüsselungselemente durch die sendende MCData-Einheit und die empfangende MCData-Einheit;
- Das Erhalten des PCK-Schlüssels und der PCK-ID-Kennung in Schritt (20) durch die sendende MCData-Einheit in einer Generierung des PCK-Schlüssels und der PCK-ID-Kennung besteht, unter Verwendung der in Schritt (10) erhaltenen Verschlüsselungselemente;
- Die in Schritt (30) von der sendenden MCData-Einheit an die empfangende MCData-Einheit übermittelte Nachricht einen MIKEY-SAKKE I-MESSAGE-Container "Multimedia Internet KEYing-Sakai-Kasahara Key Encryption", wobei der MIKEY-SAKKE I-MESSAGE-Container den mit einem SAKKE-Verschlüsselungsverfahren verschlüsselten DPPK-Schlüssel und die DPPK-ID-Schlüsselkennung umfasst; und
- Die Bestimmung (50) des PCK-Schlüssels und der PCK-ID-Schlüsselkennung durch die empfangende MCData-Einheit unter Verwendung der in Schritt 10 erhaltenen Verschlüsselungselemente erfolgt.

4. Kommunikationsnetzwerk gemäß dem Standard 3GPP MCS "3rd Generation Partnership Program Mission-Critical System", bei dem das Kommunikationsnetzwerk umfasst:
- Eine sendende MCData-Einheit:
- Eine empfangende MCData-Einheit; und
- einen MCData-Transportdienst, der mit der sendenden und der empfangenden MCData-Einheit verbunden ist;
wobei das Kommunikationsnetzwerk so konfiguriert ist, dass es das Verfahren (1) gemäß einem der vorstehenden Ansprüche ausführt.

5. Netzwerk gemäß dem vorherigen Anspruch, **dadurch gekennzeichnet, dass** die empfangende MCData-Einheit:
- eine Gruppe von MCData-Clients, die derselben MCData-Gruppe angehören wie die sendende MCData-Einheit; oder
- ein MCData-Client ist.

6. Computerprogrammprodukt, das Befehle enthält, die das Netzwerk gemäß Anspruch 5 oder 6 veranlassen, die Schritte des Verfahrens gemäß einem der Ansprüche 1 bis 4 auszuführen.

7. Computerlesbares Medium, auf dem das Computerprogramm gemäß Anspruch 7 gespeichert ist.

## Claims

1. A method (1) for establishing an MCData IPCON, Mission Critical Data Internet Protocol Connectivity, session for a group in a communication network according to the 3GPP MCS, 3rd Generation Partnership Program Mission Critical System, standard, the network comprising:
- a transmit MCData entity is an MCData client belonging to an MCData group and is connected to a transmit application entity;
- a recipient MCData entity is a set of MCData clients belonging to a same MCData group as the transmit MCData entity and is connected to a recipient application entity; and
- an MCData transport service connected to the transmit and recipient MCData entities.
the method comprising:
- Obtaining (20), by the transmit MCData entity, a DPPK, MCData Payload Protection Key, key, of the GMK, Group Master Key, type, and a key identifier DPPK-ID, MCData Payload Protection Key Identifier, of the GMK-ID, Group Master Key Identifier, type, provided by a GMS, Group Master Server, server;
- Transmitting (30), by the transmit MCData entity to the recipient MCData entity via the MCData transport service, an SIP-INVITE message comprising the DPPK key and the key identifier DPPK-IK;
- Authenticating (40), by the recipient MCData entity, the message; and
- Determining (50), by the recipient MCData entity, the DPPK key and the key identifier DPPK-ID and establishing a GRE, Generic Routing Encapsulation, tunnel between the transmit MCData entity and the recipient MCData entity, the GRE, Generic Routing Encapsulation, tunnel being established in a UDP, User Datagram Protocol, protocol,
- Transmitting (60), by the transmit application entity, a payload to the transmit MCData entity,
- Generating (70), by the transmit MCData entity, a data packet comprising:
- the payload encrypted using the DPPK key and the key identifier DPPK-ID; and
- a GRE and UDP type header;
- Sending (80), by the transmit MCData entity, the data packet (70) generated to the recipient MCData entity via the GRE tunnel established;
- Removing (90), by the recipient MCData entity, the header of the data packet (70) generated and decrypting the payload using the DPPK key and the key identifier DPPK-ID; and
- Transmitting (100), by the recipient MCData entity, the payload decrypted to the recipient application entity.

2. The method according to any preceding claim, further comprising the prior steps of:
- Obtaining (110) information about:
- authorisation of IPCON MCData session establishment, configured with an MCData media plan, between the transmit MCData entity and the recipient MCData entity; and
- the need to implement the method according to the preceding claim; and
- Implementing (120) the method of claim 1 when the IPCON MCData session establishment, configured with the MCData media plan, between the transmit MCData entity and the recipient MCData entity is authorised and if implementing the method according to the preceding claim is necessary.

3. The method according to claims 1 or 2, wherein:
- Said method is a point-to-point IPCON MCData session establishment method;
- The transmit MCData entity and the recipient MCData entity are MCData clients; and
- The DPPK key is a PCK, Private Call Key, type private key, the key identifier DPPK-ID is of the PCK-ID, Private Call Key Identifier, type, and the PCK key comprising encrypting the identity of the recipient MCData entity;
- An initial step (10) of obtaining, by the transmit MCData entity and the recipient MCData entity, the encryption elements;
- Obtaining, in step (20), by the transmit MCData entity, the PCK key and the PCK-ID key identifier consists in generating the PCK key and the PCK-ID identifier using the encryption elements obtained in step (10);
- The message transmitted in step (30) by the transmit MCData entity to the recipient MCData entity comprises a MIKEY-SAKKE, Multimedia Internet KEYing-Sakai-Kasahara Key Encryption, I-MESSAGE container, the MIKEY-SAKKE I-MESSAGE container comprising the DPPK key encrypted with a SAKKE encryption method; and the key identifier DPPK-ID; and
- Determining (50), by the recipient MCData entity, the PCK key and the key identifier PCK-ID is performed using the encryption elements obtained in step 10.

4. A communication network according to the 3GPP MCS, 3rd Generation Partnership Program Mission-Critical System, standard, the communication network comprising:
- A transmit MCData entity:
- A recipient MCData entity; and
- An MCData transport service connected to the transmit and recipient MCData entities;
the communication network being configured to implement the method (1) according to any of the preceding claims.

5. The network according to the preceding claim, **characterised in that** the recipient MCData entity is:
- A set of MCData clients belonging to the same MCData group as the transmit MCData entity; or
- An MCData client.

6. A computer program product comprising instructions that cause the network according to claim 5 or 6 to perform the steps of the method according to any of claims 1 to 4.

7. A computer-readable medium on which the computer program according to claim 7 is recorded.
